# EUROPEAN PATENT SPECIFICATION

(11) **EP 2 732 928 B1**
(45) Date of publication and mention of the grant of the patent: **04.04.2018**
(21) Application number: 13466027.3
(22) Date of filing: 06.11.2013
(51) Int. Cl.: B25J 9/00

(54) **Redundant Delta manipulator**
Redundanter Deltamanipulator
Manipulateur Delta redondant

(30) Priority: 16.11.2012 CZ 20120799
(43) Date of publication of application: 21.05.2014
(73) Proprietor: CVUT V Praze, Fakulta Strojní, 166 07 Praha 6 (CZ)
(72) Inventor: Valásek, Michael, 14300 Praha 4 (CZ); Bauma, Václav, 15200 Praha 5 (CZ)
(74) Representative: Novotny, Karel

(56) References cited:
- SEBASTIEN KRUT ET AL: "Heli4: A Parallel Robot for Scara Motions with a Very Compact Traveling Plate and a Symmetrical Design", INTELLIGENT ROBOTS AND SYSTEMS, 2006 IEEE/RSJ INTERNATIONAL CONFERENCE ON, IEEE, PI, 1 October 2006 (2006-10-01), pages 1656-1661, XP031006323, ISBN: 978-1-4244-0258-8
- DAVID CORBEL ET AL: "Towards 100G with PKM. Is actuation redundancy a good solution for pick-and-place?", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 4675-4682, XP031743854, ISBN: 978-1-4244-5038-1

## Description

### Technical Field

The invention concerns a redundant Delta manipulator with a platform connected to a frame using parallelograms and arms connected to them, whereas the parallelograms are connected to the platform or to the frame using spherical joints and the arms are rotationally connected to the frame or to the platform using rotational joints.

### State-of-the-art

In industrial production, it is still required to speed up the manipulation of objects. Beside common industrial robots and manipulators with a serial kinematic structure, the Delta manipulator with a parallel kinematic structure (US4976582) was designed. It has three rotational or linear drives controlling three parallelograms on which the platform is hung and it performs a linear movement with a manipulated object in three Cartesian coordinate axes x, y ,z. In addition, a fourth drive for the rotation of the platform with a manipulated object around the axis perpendicular to the plane of attachment to the frame has been added, which is realized either by rotation of the whole attachment system of the drives to the frame or by a rope torsion drive from the frame to the platform. The Delta manipulator has the same number of drives as degrees of freedom (three or four).

A Quattro Delta manipulator (EP 1870214 A1) has been designed, which has four rotational drives on the frame controlling four parallelograms carrying the platform. The platform is not rigid, but movable and its rotation is controlled by the fourth added parallelogram. The Quattro Delta manipulator has the same number of drives as degrees of freedom (four).

A redundantly driven version of the Delta manipulator has been designed (Corbel, D. et al.: Towards 100G with PKM. Is actuation redundancy a good solution for pick-and-place?, In: Proc. of 2010 IEEE International Conference on Robotics and Automation, Anchorage Convention District, May 3-8, 2010, Anchorage, Alaska, USA, pp. 4675-4682). This manipulator has four rotational drives on the frame that control four parallelograms carrying the platform that only performs a linear movement with a manipulated object in three Cartesian coordinate axes x ,y, z. Possible rotation is ensured by the rope torsion drive from the frame to the platform. The manipulator is redundantly driven and has a larger number of drives (four) than degrees of freedom (three). A problem can be in the size of the working area due to collisions of the four parallelograms contrary to the original Delta manipulator variant with three parallelograms.

A problem of all Delta type manipulators is the fact that the platform has a low bending rigidity towards the axis of rotation positioned in the plane of the platform and that admeasurement is carried out by the arms that are deformed by the forces that realize the movement of the platform. A problem of the mentioned Delta type manipulators with four parallelograms is an increased danger of collisions of the parallelograms.

The aim of the invention is to improve the mechanical properties of rigidity of the platform of the Delta manipulator, to decrease the danger of collisions of their parallelograms and, moreover, to improve the preciseness of admeasurement of the position of the manipulator platform.

### Subject Matter of the Invention

Accordingly, the present invention provides a redundant Delta manipulator as defined in claim 1.
Preferred embodiments of the invention are defined in the dependent claims.

The advantage of the redundant Delta manipulator device is the increased bending rigidity of the manipulator platform. Another advantage is in a lower danger of collisions of the parallelograms. Another advantage is measurement on the unloaded mechanical construction and thus determination of the position of the manipulator platform is more precise.

### Review of the Figures in the Drawings

In the enclosed figures there are schematic depictions of the redundant Delta manipulator according to the invention, where
In Figs. 1 to 4 individual alternatives are schematically depicted and
In Fig. 5 there is another embodiment of the manipulator supplemented with a measuring parallel structure

### Examples of the Embodiments of the Invention

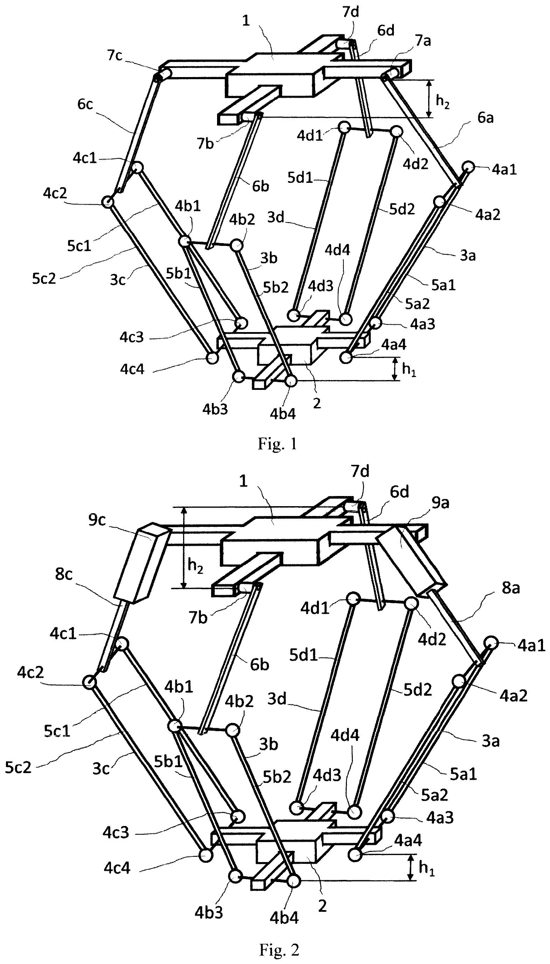

In Fig. 1 there is a basic embodiment of the redundant Delta manipulator depicted, which consists of the platform 2 carried by four parallelograms 3a-3d that are driven using four rotational arms 6a-6d and four rotational drives 7a-7d attached to the frame 1. Each of the parallelograms 3a, 3b, 3c, 3d consists of two parallel arms 5a1 and 5a2, - 5b1 and 5b2, - 5c1 and 5c2, - 5d1 and 5d2 of the same length attached to the rotational arms 6a, 6b, 6c, 6d using the spherical joints 4a1, 4a2, 4a3, 4a4 -4b1, 4b2, 4b3, 4b4 -4c1, 4c2, 4c3, 4c4 - 4d1, 4d2, 4d3, 4d4.

The spherical joints 4 can have two or more degrees of freedom, e.g. if they are created by ball joints, then they have three degrees of freedom, if they are created by Cardan joints, then they have two degrees of freedom, if they are created by pairs of Cardan joints, then they have four degrees of freedom for larger movability, whereas one of the degrees of freedom can be blocked by control. The main difference for the embodiment of the Delta manipulator according to the invention when compared to common solutions is the attachment of the spherical joints 4 of the parallelograms 3 to the platform 2 in various planes that are, in Fig. 1, distant the h₁ non-zero distance. This enables the increase of the moment by which the parallelograms 3 can act on the platform 2, which results in the increase of rigidity and dynamics of the device. Not to deteriorate manipulability, the rotational drives 7 are also attached to the frame 1 in various planes that are in Fig. 1 distant the h₂ non-zero distance. The optimum choice is when h₁=h₂ and the parallelograms 3 are of the same length and the rotational arms 6 are of the same length, but there can be more variants starting at the h₂=0 variant. Attachment of the parallelograms in various planes reduces the danger of their collision during movement, too. The same length of the parallelograms 3 and the same length of the rotational arms 6 enable the same power effect of the rotational drives 7 on movement of the platform 2.

Determination of a position of the platform in the Cartesian coordinate system of the frame is made by computation from the values of relative movements in the rotational joints 7a-7d with drives, possibly in other joints 4a1-4d4. Admeasurement of the relative rotational movements in these joints is carried out using sensors installed in the joints.

In Fig. 2 there is another embodiment of the redundant Delta manipulator according to the invention. The redundant Delta manipulator consists of the platform 2 carried by four parallelograms 3a-3d, where the parallelograms 3b and 3d are driven using two rotational arms 6b and 6d and two rotational drives 7b and 7d attached to the frame 1 and the parallelograms 3a and 3c using two sliding carts 8a and 8c with two linear actuators 9a and 9c attached to the frame 1. Assembly of the parallelograms 3 and the spherical joints 4 is in conformity with Fig. 1. The main difference in the embodiment of the Delta manipulator according to the invention, when compared to common solutions, is the attachment of the spherical joints 4 of the parallelograms 3 to the platform 2 in various planes, which are, in Fig. 2, distant the h1 non-zero distance, as well. This enables the increase of the moment by which the parallelograms 3 can act on the platform 2, which results in the increase of rigidity and dynamics of the device.

Not to deteriorate manipulability, the rotational drives 7 are also attached to the frame 1 in various planes that are, in Fig. 1, distant the h₂ non-zero distance. The optimum choice for this case is h₂=0, since the spherical joints 4b3, 4b4 of the parallelogram 3b and the spherical joints 4d3, 4d4 of the parallelogram 3d are positioned in Fig. 2 in the same plane and the parallelograms 3 are of the same length and the rotational arms 6 are of the same length, but there can be more variants.

Determination of a position of the platform in the Cartesian coordinate system of the frame is made, also for this embodiment, by computation from the values of relative movements in the rotational joints 7b, 7d with drives and in the sliding guides of the carts 8a and 8c with drives, possibly in other joints 4a1-4d4. Admeasurement of the relative rotational and linear movements in these joints is carried out using sensors installed in these joints.

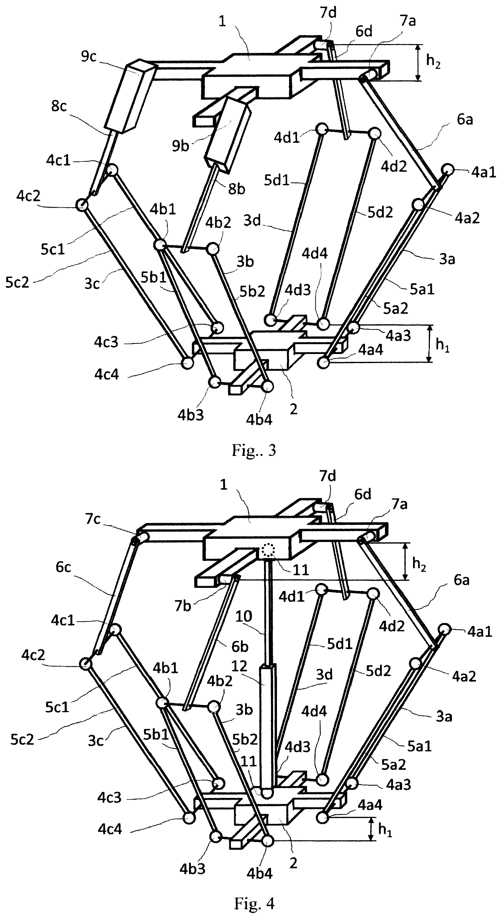

In Fig. 3 there is another variant of the embodiment of the redundant Delta manipulator to the embodiment in Fig. 2 according to the invention. In this case, the redundant Delta manipulator has the drives created by the rotational arms 6a and 6d positioned side by side, contrary to the embodiment in Fig. 2, where the drives created by the rotational arms 6b and 6d are positioned against each other. Then the drives created using two sliding carts 8b and 8c and two linear drives 9b and 9c are also positioned side by side, contrary to the embodiment in Fig. 2, where the drives created with two sliding carts 8a and 8c and two sliding drives 9a and 9c are positioned against each other. The optimum choice is when h₁=h₂ and the parallelograms 3 are of the same length and the rotational arms 6 are of the same length, but there can be more variants starting at the h₂=0 variant. Other parts of the embodiment are the same as in Fig. 2.

In Fig. 4 there is a schematic depiction of a solution of admeasurement of the movement and the position of the Delta manipulator according to the invention. The subject matter is that beside the parallelograms 3 on the rotational arms 6 and/or the sliding carts 8, which transfer forces from the drives 7 and//or 9 to the platform 2, a collateral (parallel) structure of the Delta manipulator, which contains only sensors, is positioned. Since the collateral (parallel) structure is only stressed minimally by forces, the admeasurement in the sensors positioned on it is more precise than common admeasurement only in the drives. This leads to a more precise positioning of the Delta manipulator and to the possibility of increasing its rigidity using the feedback control. In Fig. 4 the Delta manipulator according to the invention in the embodiment in Fig. 1 is depicted. In the embodiment depicted in Fig. 4, between the frame 1 and platform 2 arm 10 of the collateral (parallel) construction is attached to the frame 1 using the rotational (spherical with two degrees of freedom - Hook) joint 11 of the collateral construction and attached to the platform 2 using the sliding guide 12 and using the rotational (spherical with three degrees of freedom) joint 11 of the collateral construction. The sensors are positioned in the rotational joints 11 and the sliding guides 12 of the collateral construction and their number is six that is more than three degrees of freedom of the platform 2.

The procedure of possible control of the Delta manipulator with admeasurement on the collateral construction is as follows: The drives 7 and/or 9 of the manipulator are equipped with sensors of relative movement and the sensors are used for stabilization of the drives using a velocity feedback. The determination of a position of the platform 2 obtained by the measurement on the collateral construction is used for the position feedback. With regard to the fact that the arms 10 of the collateral construction are not stressed by forces of the drives and, therefore, they are not deformed by the forces, the measurements in the rotational joints 11 and /or in the sliding guides 12 provide more precise data about the position of the platform 2 and its using during control ensures more precise positioning of the platform 2.

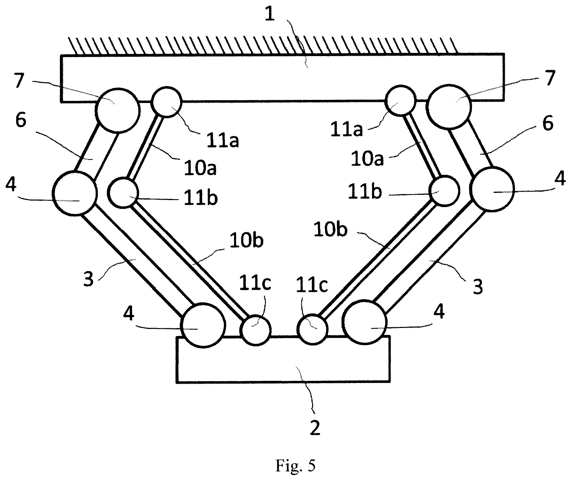

In Fig. 5 there is a schematic depiction of a solution of admeasurement of the movement and the position of the platform of the Delta manipulator according to the invention. It is a schematic plane projection of the Delta manipulator. Beside the parallelograms 3 on the rotational arms 6 and/or the sliding carts 8, which transfer the forces from the drives 7 and//or 9 to the platform 2, a collateral (parallel) structure of the Delta manipulator, which contains only sensors, is passed from the frame 1. Since this collateral (parallel) structure is only stressed minimally by forces, the admeasurement in the sensors of the rotation and/or the linear motion positioned on it is more precise than the common admeasurement only in the drives. This leads to more precise positioning of the platform 2 of the Delta manipulator and to the possibility to increase its rigidity using the feedback control. The collateral (parallel) structure of the Delta manipulator is created by two strings of arms consisting of the arms 10a and 10b connected with the rotational (spherical with two degrees of freedom - Hook) joint 11b. The rotating arm 10a is attached to the frame 1 using the rotational joint 11a. The arm 10b is attached to the platform 2 using the rotational (or spherical) joint 11c. The arm 10b can be realized as a parallelogram in a similar way as the parallelogram 3. The sensors of rotation are positioned in the joints 11a, 11b and 11c. Their number can be different. The rotational sensors in the joints 11a and 11c are created by 4 sensors for 3 degrees of freedom of the platform 2. The rotational sensors in all the joints 11a, 11b, 11c are created with 8 sensors for 3 degrees of freedom of the platform 2. Advantageously, a redundant number of the sensors is used, so the number of the sensors is higher than the number of degrees of freedom of the manipulator, for improving the accuracy of the measurement, for calibration of the manipulator, for auto-calibration of the collateral construction with the sensors or for on-line measurement and the compensation of temperature deformations.

There are other possible embodiments created by combining the above mentioned variants.. The parallelograms mentioned within the embodiments described above can be replaced with an arm connected to the consequent parts of the manipulator on both ends with the Cardan joint.

The described embodiments of the manipulator are symmetric, but there are more possible variants even with a non-symmetric embodiment.

The increase of the moment acting from the drives to the platform 2 and of rigidity of the platform 2 of the device according to the invention can be, advantageously, used even for the non-redundant versions of the Delta manipulator with only three parallelograms and three drives.
The number of the arms with the rotational drive and the number of the arms with the linear drive can be variable and combined. For example, all the drives can be rotational or linear or their combination is possible.
The number of the drives can be larger than four, in the above mentioned embodiments there are always only 4 parallelograms driven by 4 drives.

The described embodiments of the Delta manipulator use a redundant number of the drives, thus more drives than degrees of freedom of the manipulator. This enables increasing and equalizing the action of forces of the drives on the platform 2 in the entire working area and/or enables the use of other advanced solutions of control with the help of redundant drives, e.g. an antibacklash control.

The described embodiments of the measurements on the Delta manipulator use a redundant number of sensors, therefore more sensors than degrees of freedom, as well. The use of a redundant number of the sensors, so a larger number of the sensors than the number of degrees of freedom of the manipulator, is advantageous for improving measurement accuracy, for the calibration of the manipulator, for auto-calibration of the collateral construction with the sensors or for on-line measurement and compensation of temperature deformations. It is especially advantageous, when the number of the sensors is higher at least by two than the number of degrees of freedom.

The described admeasurement of the movement and the position of the platform 2 for the Delta manipulators on the collateral (parallel) structure that is not loaded with forces from the drives can be advantageously used for all the variants of Delta manipulators.

The Delta manipulators can be used, besides for manipulation, also for manufacturing operations and/or for measurements so that a relevant tool (e.g. a spindle with a cutter, a welding head or a measuring probe) is carried by the platform 2.

All the embodiments mentioned above can be further combined arbitrarily. Control of the movement of the manipulator is processed by a computer.

## Claims

1. Redundant Delta manipulator with a rigid non-configurable platform (2) connected to a frame (1) using parallelograms (3) and arms (6) connected to them, wherein the parallelograms are connected to the platform using spherical joints (4) and the arms are rotationally connected to the frame using rotational joints (7) wherein the spherical joints (4) for connection of adjacent parallelograms (3) to the platform (2) are positioned in different parallel planes, and wherein the axis of the rotational joints (7) for connection of the arms (6) to the frame (1) are positioned in the same plane or in different parallel planes.

2. The redundant Delta manipulator, according to Claim 1, comprising two pairs of opposite parallelograms connected to opposite arms, wherein the spherical joints (4) for connecting the opposite parallelograms (3) to the platform (2) are positioned in the same plane parallel to the plane or planes created with other spherical joints (4) for connection of other parallelograms to the platform (2) and wherein the rotational joints (7) for connection the opposite arms (6) to the frame (1) are positioned in the same plane.

3. The redundant Delta manipulator, according to claim 1, wherein the parallel planes of the spherical joints (4) are distant from each other in the same value as the parallel planes of the rotational joints (7).

4. The redundant Delta manipulator, according to one of the abovementioned Claims, wherein at least one of the arms comprises a sliding cart (8).

5. The redundant Delta manipulator, according to one of the abovementioned Claims, comprising two pairs of opposite parallelograms connected to opposite arms, wherein one of the pairs of opposite arms comprises sliding carts (8) and the other pair of opposite arms does not comprise a sliding guide and wherein their rotational joints (7) are positioned in a plane parallel to the plane of the spherical joints (4) for connection of these parallelograms (3b, 3d) to the platform 2.

6. The redundant Delta manipulator, according to claims 1 to 4, comprising two pairs of opposite parallelograms connected to opposite arms, wherein one of the pairs of adjacent arms comprises sliding carts (8) and the other pair of adjacent arms does not comprise a sliding guide and wherein their rotational joints (7) are positioned in parallel planes distant from each other in the same value as the parallel planes created by their spherical joints (4) for connection of these parallelograms (3a, 3d) to the platform 2.

7. The redundant Delta manipulator, according to one of the abovementioned Claims, featured by the fact that the number of the parallelograms (3) is equal to or larger than four.

8. The redundant Delta manipulator, according to one of the abovementioned Claims, featured by the fact that the parallelogram is created by two Cardan joints.

9. The redundant Delta manipulator, according to one of the abovementioned Claims, featured by the fact that collateral to the parallelograms (3) there is a collateral measuring, not-loaded construction between the frame (1) and the platform (2).

## Patentansprüche

1. Redundanter Delta-Manipulator mit der festen nicht konfigurierbaren Plattform (2), verbundenen mit dem Rahmen (1) mittels den Parallelogrammen (3) und mit ihnen verbundenen Armen, wo die Parallelogramme mit der Plattform über die Kugelgelenke (4) verbunden sind, und die Arme drehbar mit dem Rahmen über die Drehgelenke (7) verbunden sind, wobei die Kugelgelenke (4) zum Verbinden von benachbarten Parallelogrammen (3) mit der Plattform (2) in verschiedenen parallelen Ebenen liegen, und wobei die Achse der Drehgelenke (7) zum Verbinden von Arme (6) zum Rahmen (1), in der selben Ebene oder in verschiedenen parallelen Ebenen liegen.

2. Redundanter Delta-Manipulator nach dem Anspruch 1, enthaltend zwei Paaren von entgegengesetzten Parallelogramme verbundenen mit entgegengesetzten Armen, wobei die Kugelgelenke (4) zum Verbinden der entgegengesetzten Parallelogrammen (3) mit der Plattform (2) in derselben Ebene parallel zur Ebene oder Ebenen gebildeten aus anderen Kugelgelenken (4) zum Verbinden von anderen Parallelogrammen mit der Plattform (2) liegen, und wobei die Drehkegeln (7) zum Verbinden der entgegengesetzten Arme (6) zum Rahmen (1) in derselbe Ebene liegen.

3. Redundanter Delta-Manipulator nach dem Anspruch 1, wo die parallelen Ebenen der Kugelgelenke (4) um den gleichen Wert wie die parallelen Ebenen der Drehgelenke (7) voneinander entfernt sind.

4. Redundanter Delta-Manipulator nach einem der vorhergehenden Ansprüche, wo mindestens einer der Arme ein Verschiebungswagen (8) enthält.

5. Redundanter Delta-Manipulator nach irgendeinem der vorhergehenden Ansprüche, umfassend zwei Paaren der entgegengesetzten Parallelogramme verbundenen mit den entgegengesetzten Armen, wobei ein Paar der entgegengesetzten Armen die Verschiebungswagen (8) umfaßt, und der zweite Paar der entgegengesetzten Armen keine Verschiebungsführung umfaßt, wobei ihre Drehkegeln (7) in der Ebene parallel mit der Ebene der Kugelkegeln (4) zum Verbinden dieser Parallelogrammen (3b, 3d) mit der Plattform (2) liegen.

6. Redundanter Delta-Manipulator nach den Ansprüchen 1 bis 4, enthaltend zwei Paaren von entgegengesetzten Parallelogramme verbundenen mit entgegengesetzten Armen, wobei ein Paar der benachbarten Armen zwei Verschiebungswagen (8) enthält, und der zweite Paar der benachbarten Armen keine Verschiebungsführung enthält, und wo ihre Drehkegeln (7) in den parallelen Ebenen liegen, die um den identischen Abstand, wie die parallelen Ebenen gebildeten aus ihren Kugelgelenken (4) zum Verbinden dieser Parallelogrammen (3a, 3d) mit der Plattform (2), entfernt sind.

7. Redundanter Delta-Manipulator nach irgendeinem der vorhergehenden Ansprüche **dadurch gekennzeichnet, daß** der Anzahl der Parallelogramme (3) vier oder mehr ist.

8. Redundanter Delta-Manipulator nach irgendeinem der vorhergehenden Ansprüche **dadurch gekennzeichnet, daß** das Parallelogramm von zwei Kardangelenke gebildet ist.

9. Redundanter Delta-Manipulator nach irgendeinem der vorhergehenden Ansprüche **dadurch gekennzeichnet, daß** parallel mit den Parallelogrammen (3), zwischen dem Rahmen (1) und der Plattform (2) eine Mess-, unbelastete Parallel-Konstruktion angeordnet ist.

## Revendications

1. Le manipulateur redondant Delta à plateforme fermée non configurable (2) liée au châssis (1) à l'aide des parallélogrammes (3) et des bras y liés, où les parallélogrammes sont liés avec la plateforme en utilisant les articulations sphériques (4) et les bras sont liés de façon rotative au châssis par articulations rotatives (7), et les articulations sphériques (4) destinées à lier des parallélogrammes voisins (3) avec la plateforme (2) sont situées dans de différents plans parallèles et les axes des articulations rotatives (7) destinées à lier des bras (6) au châssis (1) sont situées dans le même plan ou dans de différents plans parallèles.

2. Le manipulateur redondant Delta selon la revendication 1, comprenant deux paires des parallélogrammes opposés liés aux bras opposés, où les articulations sphériques (4) destinées à lier des autres parallélogrammes (3) avec la plateforme (2) sont situées dans le même plan parallèle au plan ou aux plans formé(s) par autres articulations sphériques (4) pour la liaison des autres bras avec la plateforme (2) et les articulations rotatives (7) pour la liaison des bras opposés (6) au châssis (1) sont situées dans le même plan.

3. Le manipulateur redondant Delta selon la revendication 1 où les plans parallèles des articulations sphériques (4) sont écartées l'un de l'autre de la même valeur que les plans parallèles des articulations rotatives (7).

4. Le manipulateur redondant Delta selon l'une quelconque des revendications précédentes, où au moins un des bras comprend un chariot coulissant.

5. Le manipulateur redondant Delta selon l'une quelconque des revendications précédentes, comprenant deux paires de parallélogrammes liés aux bras opposés, où une paire de bras opposés comprend des chariots coulissants (8) et la seconde paire ne comprend pas de ligne coulissant et leurs articulations rotatives (7) sont situées dans le plan parallèle avec le plan des articulations sphériques (4) au but de la liaison de ces parallélogrammes (3b, 3d) avec la plateforme (2).

6. Le manipulateur redondant Delta selon les revendications 1 à 4 comprenant deux paires des parallélogrammes opposés liés aux bras opposés, où une paire des bras voisins comprend des chariots coulissants (8) et la seconde paire des bras voisins ne comprend pas de ligne coulissant et où leurs articulations rotatives (7) sont situées dans les plans parallèles écartés de distance identique avec les plans parallèles formés par leurs articulations sphériques (4) au but de la liaison de ces parallélogrammes (3a, 3d) avec la plateforme (2).

7. Le manipulateur redondant Delta selon l'une quelconque des revendications précédentes **caractérisé en ce que** le numéro de parallélogrammes (3) est supérieur à quatre ou plus.

8. Le manipulateur redondant Delta selon l'une quelconque des revendications précédentes **caractérisé en ce que** le parallélogramme est formé en deux joints de Cardan.

9. Le manipulateur redondant Delta selon l'une quelconque des revendications précédentes **caractérisé en ce que** simultanément avec les parallélogrammes (3), entre le châssis (1) et la plateforme (2), il y a une construction parallèle déchargée à mesurer.
